# EUROPÄISCHE PATENTSCHRIFT

(11) **EP 2 214 889 B1**
(45) Veröffentlichungstag und Bekanntmachung des Hinweises auf die Patenterteilung: **19.08.2020**
(21) Anmeldenummer: 08842035.1
(22) Anmeldetag: 06.10.2008
(51) Int. Cl.: B29C 64/165, B29C 64/25, B33Y 30/00, B33Y 10/00

(54) **VORRICHTUNG ZUM SCHICHTWEISEN AUFBAU VON MODELLEN**
DEVICE FOR THE LAYER-WISE PRODUCTION OF PATTERNS
DISPOSITIF DE CONSTITUTION EN COUCHES DE MODÈLES

(30) Priorität: 23.10.2007 DE 102007050953
(43) Veröffentlichungstag der Anmeldung: 11.08.2010
(73) Patentinhaber: voxeljet AG, 86316 Friedberg (DE)
(72) Erfinder: EDERER, Ingo, 82269 Geltendorf (DE); HARTMANN, Andreas, 86391 Stadtbergen (DE)
(74) Vertreter: Helbig, Christian
(86) Internationale Anmeldenummer: PCT/DE2008/001603
(87) Internationale Veröffentlichungsnummer: WO 2009/052774

(56) Entgegenhaltungen:
- US-A1- 2002 079 601
- US-A1- 2004 104 515
- US-A1- 2004 265 413

## Beschreibung

Die vorliegende Erfindung bezieht sich auf eine Vorrichtung zum schichtweisen Aufbau von Modellen, die eine Montageplatte, Führungen zur Bewegung eines Beschichters und einer Tropfendosiereinhelt, eine höhenverfahrbare und auswechselbare Werkstückplattform sowie eine Materialzuführeinrichtung aufweist, wobei an die Montageplattform die Hauptkomponenten der Vorrichtung montiert werden, bevor diese In ein Gehäuse eingeführt und dort fixiert wird. Die Entwicklung von Bauteilen stellt heute neue Anforderungen an die produzierende Industrie. Dem steigenden Zelt- und Kostendruck läßt sich begegnen, indem neue Verfahren wie Rapid-Prototyping und Rapid-Toollng verwendet werden.
So ist es beispielsweise ein Verfahren (Objet) bekannt, bei dem ein härtbarer Kunststoff in Form flüssiger Tröpfchen mittels eines verfahrbaren Dosiergerätes auf eine höhenverschiebbare Bauplattform oder Werkstückplattform selektiv Innerhalb einer Kontur des zugehörigen Querschnittes des gewünschten Objektes aufgetragen und mittels UV-Strahlung gehärtet wird. Durch mehrmaligen Auftrag entsteht das gewünschte Bauteil Schicht für Schicht. Anschließend wird das Objekt von der Bauplattform entfernt.

Bei einem anderen Verfahren wird eine Schicht eines schüttfähigen Partikelmaterials In einem Bereich auf einer Bauunterlage abgelagert wird. Darauf wird ein aushärtender Binder In Form flüssiger Tröpfchen mittels eines verfahrbaren Doslergerätes auf die Schicht von Partikelmaterial in einem ausgewählten Teilbereich des Bereichs aufgetragen. Bindermaterial und Partikelmaterial bilden eine verfestigte Struktur. Weitere Schichten werden jeweils durch Wiederholen der vorangehend genannten Schritte gebildet. Danach wird die verfestigte Struktur von nicht verfestigten Anteilen des Partikelmaterials getrennt.

Um nun solche aus dem Stand der Technik bekannten sogenannten Rapid-Prototyping-Verfahren durchzuführen, sind verschiedene Vorrichtungen bekannt.

Eine typische Ausgestaltung eines Gerätes gemäß z.B. der DE0010047614 besteht aus einem geschweißten Rahmen aus Stahlrohren, die überarbeitete Führungsbahnen tragen. Derartige Rahmen werden aus mehreren Elementen gefügt und aufwendig eingestellt. Da die Fügeflächen rund um die Rahmenteile verteilt sind, müssen die Einzeltelle aufwendig rundum bearbeitet werden. Die Verkleidung wird dann an die fertig montierte Vorrichtung gehängt und übernimmt dabei keine tragende Funktion.

Aus der WO20030160667 ist ein sehr einfaches Gerät bekannt, dass Im wesentlich aus gekanteten Blechteilen besteht, an die einfache Rundstabführungen direkt angeschraubt sind. Diese Ausführung hat In jedem Fall Einschränkungen bei der Gerätegenaulgkelt und ist deshalb nur für kleinere Geräteabmessungen tauglich, da hier die Führungsabweichungen nicht so stark auffallen.
Bei allen aus dem Stand der Technik und der Praxis bekannten Vorrichtungen hat es sich jedoch als nachteilig erwiesen, dass die Montage und Justage der Anlage zeltintensiv und teuer Ist.

Aus der US 2002079601A1 Ist ein 3D- Drucker bekannt, der mehrere Druckköpfe verwendet, die auf einem Haltemittel zum reziproken Verfahren In einem Bauraum auf einer langsamen und schnellen Achse angeordnet sind. Es ist daher Aufgabe der vorliegenden Erfindung, eine Vorrichtung zum schichtweisen Aufbau von Modellen bereitzustellen, die möglichst genau, einfach montierbar und dabei kostengünstig ist.

Erfindungsgemäß wird diese Aufgabe durch eine Vorrichtung gemäß Anspruch 1 zum schichtweisen Aufbau von Modellen dadurch gelöst, dass die Vorrichtung zum schichtweisen Aufbau von Modellen aufweist eine höhenverfahrbare Werkstückplattform, eine Verkleidung (40), eine Dosiervorrichtung (28) zum Aufbringen von Bindemittel auf die Werkstückplattform, wobei die Vorrichtung zusätzlich eine Montageplattform (21) aufweist, an die alle gemäß eines kartesischen Achsensystems verfahrbaren Verfahreinrichtungen der Dosiervorrichtung (28) und der Werkstückplattform angebracht sind und ein Beschichter (4) zum Aufträgen von Fluiden vorgesehen ist, der Beschichter (4) und alle Verfahreinheiten des Beschichters (4) an der Montageplattform (21) angebracht sind und wobei höheneinstellbare Befestigungselemente verwendet werden, mit denen der Abstand der Montageplattform zu der Verkleidung der Vorrichtung einstellbar ist, sodass alle Anbautelle an die Montageplattform außerhalb der Verkleidung montiert, eingestellt und/oder verdrahtet werden können bevor die Montageplattform (21) in die Verkleidung eingebracht und dort fixiert wird.

Erfindungsgemäß umfasst die Vorrichtung zum schichtweisen Aufbau von Modellen der eingangs genannten Art dadurch eine Montageplatte, an die alle prozessrelevanten Verfahreinheiten und Fördereinrichtungen montiert werden, bevor die Montageplatte mitsamt der Anbauteile in ein Gehäuse eingebracht und dort fixiert wird.

Die Montageplatte weist dazu Ausschnitte für den Bauraum, die Pulver-Zu- und Abfuhr auf sowie für Wartungseinhelten für den Tropfendosierapparat wie z.B. Relnigungs- und Cappingstation.

Zudem weist die Montageplatte Befestigungsmöglichkelten für die Verfahrachsen der Tropfendoslereinheit und des Beschichters sowle für die Verfahreinheit der Bauplattform auf.

Die Montageplatte Ist dabei so dimensioniert, dass sie wenn an wenigen Punkten befestigt, sich nicht oder nur In engen Grenzen verformt, um die Genauigkeit bei den Auftragsmechanismen zu gewährleisten.
Dies gilt Insbesondere für die Belastung durch das Gewicht der Anbauteile und das Gewicht des Partikelmaterials auf der Bauplattform während des Bauprozesses.

Die Montageplattform ist dabei als ebene Platte z.B. aus einer vollflächig bearbeiteten Aluminiumplatte ausgebildet.

Die Bauplattform befindet sich In einem vorteilhafterweise als Wechselbehälter ausgeführten Bauzylinder. Der Bauzylinder enthält eine in Richtung des Zylinders bewegliche Bauplattform, die in ihren unteren Endlage nicht aus dem Bauzylinder rutschen kann. Die Bauplattform weist eine an Ihrem seltlichen Rand zur Wandung des Bauzylinders hin eine Dichtung auf, die ein Vorbeiströmen des aufgetragenen Partikelmaterials verhindert. Um die Gewichtskräfte des Wechselbehälters und die zusätzlichen Reibungskräfte durch die Reibung zwischen Bauplattformdichtung und Wechselbehälterwand auf kurzem Weg In die Montageplatte einzuleiten, befindet sich eine Führung für den Wechselbehälter an der Unterseite der Montageplatte. Der Wechselbehälter wiederum weist seinerseits Führungselemente an den beiden gegenüberliegenden oberen Enden an den Außenseiten des Bauzylinders auf.

Über diese Führungselemente kann der Wechselbehälter leicht In die Vorrichtung eingeschoben werden und ist dabei in vertikaler Richtung fixiert. Als Führungselemente eignen sich z.B. Rollenführungen. Die Rollen können z.B. an der Unterseite der Montageplattform entlang der Einführstrecke des Wechselbehälters angeordnet sein. Der Wechselbehälter weist dann wiederum eine passende Führungsschiene auf, die formschlüssig In die Rollen greift, oder diese formschlüssig umschließt.

Am Ende der Einführstrecke befindet sich vorteilhafterweise ein Anschlag der eine Endlage des Wechselbehälters In der Vorrichtung definiert. Der Wechselbehälter wird nach Einbringen in die Vorrichtung durch eine Haltevorrichtung fixiert.

Die Bewegung der Bauplattform erfolgt über eine vertikale Aufzugmechanik, die orthogonal an der Montageplatte angebracht Ist, Die Aufzugmechanik kann z.B. aus einer oder mehreren Gewindespindeln bestehen, die sich in Spindelmuttern drehbar gelagert in einer Zwischenplattform montiert sind, die sich wiederum unterhalb der Bauplattform befindet. Die Gewindespindeln können über einen gemeinsamen Riementrieb und einen Servomotor angetrieben werden. Bei Verwendung von zwei oder mehr gleichzeitig arbeitenden Spindeln, kann auf eine zusätzlich Führung der Aufzugmechanik verzichtet werden, da die Bauplattform damit ausreichend In Ihrer Lage fixiert werden kann und alle Kippmomente ausreichend abgeführt werden.
Die Zwischenplattform kann dann z.B. über Distanzplatten an der Montageplattform befestigt sein.

Alternativ kann die Aufzugmechanik auch seitlich des Wechselbehälters angebracht sein und dann mit Führungselementen wie z.B. Schienen mit Führungswagen ausgestattet sein.
Die Bauplattform im Wechselbehälter wird dann über ein Kupplungselement mit dem Aufzugsystem kraftschlüssig verbunden. Dies kann z.B. ein pneumatisch betätigtes Nullpunkt-Spannsystem sein, wie es aus Werkzeugmaschinen bekannt Ist. Über die Kupplung werden alle Verfahrbewegungen auf die Bauplattform übertragen und wiederum alle Kräfte und Momente, die auf die Bauplattform wirken wie z.B. Reibungskräfte der Dichtung zwischen Behälterwand und Plattform, Verdichtungskräfte beim Schichtauftrag und Gewichtskräfte durch das Partikelmaterial in das Aufzugsystem geleitet.
Auf der Montageplatte werden die Achsen für die Bewegung der Beschichtereinheit und für den Tropfendosierapparat montiert.
Unter Achsen werden Kombinationen aus Führungssystem und Antrieb verstanden. Die Führungsaufgabe kann z.B. von Schienen mit Schlitten erfüllt werden, wobei die Schlitten mit Kugelumlaufsystemen auf der Schiene abrollen.

Der Tropfendoslerapparat wird Im Bauprozess typischerweise mäanderförmig über das Baufeld bewegt. Diese Bewegung wird über ein System orthogonal zueinander stehender Achsen abgebildet. Aufgrund der Dimension der Baufeldes Ist es in der Regel erforderlich, dass ein Achsenpaar entlang der gegenüberliegenden Seiten des Baufeldes angeordnet ist und eine weitere Achse als Verbindung trägt.
Die Bewegung erfordert eine möglichst gleichmäßige Geschwindigkeit über die lange Verfahrdistanz (X-Achse) und eine exakte Positionierbarkelt über die kurze Verfahrdistanz (Y-Achse). Aufgrund der Minimierung der bewegten Massen und der Minimierung des Achsenverschleißes erweist es sich als vorteilhaft, dass die einzelne Achse, die X-Achse bildet und das Achsenpaar als Y-Achse dient.

Im Prozess arbeitet der Tropfendosierapparat vorzugsweise nur Im Bereich konstanter Geschwindigkeit bei Bewegung über die X-Achse, um die Tropfen örtlich genau auf das Baufeld zu dosieren. Die Tropfen werden hier deshalb konform zu Impulsen eines an der X-Achse montierten Maßstabssystems abgegeben. Als Bewegungssystem kann eine Verfahrachse mit Riemenantrieb verwendet werden, die einen gleichmäßigen Lauf ermöglicht. Alternativ kann eine Achse mit Gewindespindel eingesetzt werden. In diesem Fall kann wegen der höheren Positioniergenauigkeit der Achse auf ein lineares Maßstabssystem verzichtet werden und an dessen Stelle ein Encoder an der Motorachse eingesetzt werden. Nicht zuletzt kann auch ein Linearantrieb, wie er sich zunehmend in Werkzeugmaschinen findet verwendet werden.
Die Y-Achse muss hingegen genau positionieren, was einen Gewindespindelantrieb oder einen Linearantrieb erfordert.

Der Beschichtungsapparat hingegen soll möglichst mit konstanter Geschwindigkeit über das Baufeld bewegt werden und dabei Partikelmaterial auf die Bauplattform abgeben. Für diese Bewegung eignen sich sowohl Riemen- als auch Gewlndespindel-Antriebe als auch Linearantriebe.

Die Anordnung der Achsen für den Beschichtungsapparat soll nicht mit den Achsen für den Tropfendosierappart kollidieren. Deshalb bietet es sich an, wiederum aufgrund der Größe des Baufeldes und wegen der Verringerung der Momentenbelastung auf eine Achse ein Achsenpaar zu verwenden, dass parallel zu der Y-Achse des Tropfendosierapparates angeordnet ist.

Für eine Vereinfachung des Apparates, besteht die Möglichkeit auf ein gesondertes Achsenpaar für den Beschichtungsapparat zu verzichten und gleichzeitig das Y-Achsenpaar für den Tropfendosier- als auch den Beschichtungsapparat zu verwenden. Dies erfolgt dadurch, dass der Beschichter neben die X-Achse auf die Führungswagen der Y-Achse montiert wird.

Am Ende der Verfahrstrecke des Beschichtungsappartes befindet sich ein Befüllmechanismus zur Wiederbefüllung des Beschichtungsapparates mit Partikelmaterial. Diese Materialzuführung erfolgt vorzugsweise mittels eines Fördersystems, das aus einem Partikelmaterial-Vorrat unterhalb der Montageplattform oder außerhalb der Vorrichtung bedient wird,
Daneben gibt es einen weiteren Partikelmaterial-Vorrat unterhalb der Montageplattform für überschüssiges Partikelmaterial, das von der Beschichtereinheit über den Rand der Bauplattform geschoben wird. Diese Partikelmenge wird vorzugsweise durch einen Abwurfschlitz in der Montageplattform abgeführt, wenn sich die Beschichtereinheit darüberhinweg bewegt.
Ein weiterer Abwurfschlitz findet sich auf der gegenüberliegenden Seite des Baufeldes am Beginn der Beschichterfahrt.

Die Vorrichtung kann durch eine Verkleidung geschlossen werden. Insbesondere im Prozessraum oberhalb der Montageplattform ergibt sich aus Sicherheitsgründen die Notwendigkeit einer Haube, die den Anwender vor den Partikelstäuben und Prozessdämpfen schützt als auch unbeabsichtigten Kontakt mit bewegten Teilen verhindert. Diese Haube sollte in der Form beweglich sein, um im Stillstand einen bestmöglichen Zugang zu den Elementen der Vorrichtung zu gewähren. Dazu eignet sich ein Klappmechanismus, der ein Aufklappen der Haube ermöglicht. Der Klappmechanismus kann direkt auf der Montageplattform angebracht sein. Eine in die Montageplattform eingebrachte Dichtung schirmt den Prozessraum weiter gegen die Umwelt ab.
Um den Prozessraum weiterhin gegen die Unterseite der Montageplattform abzuschirmen, bietet sich die Einhausung der Einführstrecke des Wechselbehälters an. Eine am Beginn der Einführstrecke angeordnete Türe verschließt die Einführstrecke während des Prozesses,

Ist die Montageplattform ausreichend groß dimensioniert, so dass sie den äußeren Rand einer darunter liegenden Verkleidung
Abdeckt, kann damit der Prozessraum ausreichend nach unten abgedichtet werden.

Die Verkleidung unterhalb der Montageplattform kann so ausgestaltet sein, dass sie gleichzeitig die Funktion eines Gestells übernimmt und die Montageplattform trägt, In einer vorteilhaften Ausführung besteht die Verkleidung aus einem einzigen die Vorrichtung umschließenden Bauteil z.B. aus gekanteten und verschweißten Blechteilen, das die Montageplattform aufnimmt.
In dem freien umbauten Raum unterhalb der Montageplattform können des weiteren nicht direkt am Prozess beteiligte Baugruppen wie Schaltschrank, Fluid- und Druckluftversorgung platzsparend untergebracht werden.

Aufgrund der Ausgestaltung der Montageplattform als ebene Platte wird der Aufwand zur Ausrichtung der Achsenpaare zueinander minimiert. Lediglich die Parallelität der Achsen muss überprüft werden. Einfache Anschläge der Achsen können In die Montageplatte durch Passstifte eingebracht werden und die korrekte Position der Achsen zumindest einseitig vorgeben. Bei ausreichender Dimensionierung der Montageplattform ist keine Bearbeitung der Verkleidung an der Aufnahme der Montageplattform notwendig, was die Herstellkosten deutlich reduziert. Zur Befestigung der Montageplatte müssen dann lediglich höheneinstellbare Befestigungselemente an verschiedenen Stellen verwendet werden mit denen der Abstand der Montageplattform zur Verkleidung eingestellt wird.

Zur Vereinfachung der Montage der Vorrichtung können alle Anbauteile an die Montageplatte außerhalb der Verkleidung montiert, eingestellt und verdrahtet werden. Dies erfolgt vorzugsweise auf einem eigenen einfachen Montagegestell. Dabei Ist die Zugänglichkeit besser als bei Montage Im eingebauten Zustand in der Verkleidung.

Im Folgenden wird eine bevorzugte Ausführung anhand der Zeichnungen beschrieben. In der Zeichnung zeigen:
Fig. 1: Ausführung der Vorrichtung als Rohrgestell (Stand der Technik)
Fig. 2: Schrägansicht auf die teilmontierte Montageplattform
Fig. 3: Frontansicht der Montageplattform mit angebauten Achsen
Fig. 4a - 4c: Einsetzen der Montageplattform in die Verkleidung
Fig. 5: montierte Vorrichtung in der Schrägansicht

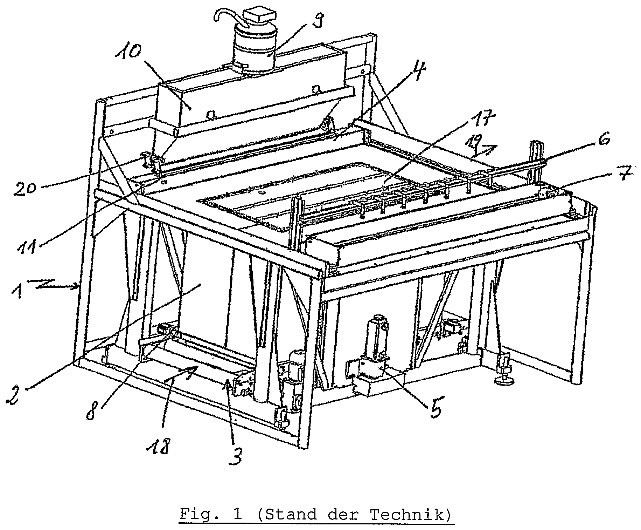

Figur 1 zeigt eine Vorrichtung zum 3D-Drucken nach dem Stand der Technik ohne angebaute Verkleidung. Deutlich sichtbar ist der umliegende Rohrrahmen 21, der die einzelnen Führungen für die Komponenten Beschichter 4, X-Achse 7 und Z-Achse 5 sowie die Materialzuführung 10 trägt.

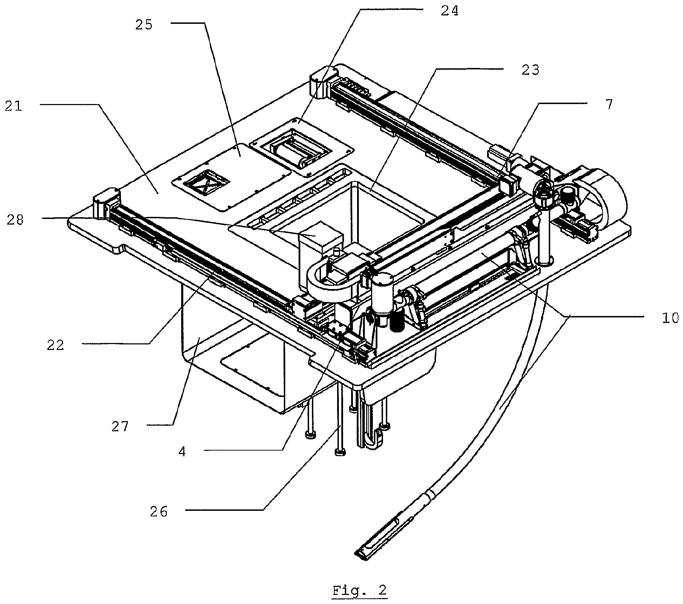

Figur 2 zeigt die Montageplattform gemäß der vorliegenden Erfindung mit den Anbauteilen. Das Y-Achsenpaar 22 ist auf den gegenüberliegenden Seiten des Baufeidrandes 23 befestigt. Der Druckkopf 28 Ist an der Druckkopfachse 7 montiert, die wiederum auf der Y-Achse 22 aufliegt. Ebenfalls auf der Y-Achse wird der Beschichter 4 geführt. Im vorderen Teil der Montageplattform findet sich die Materialzuführung 10. Im vorderen Bereich Ist die Reinigungsstation 24 für den Druckkopf 28 zu sehen. Daneben befindet sich die Cappingstation 25, die den Druckkopf im Stillstand verschließt und so ein Austrocknen oder Verunreinigung des Druckkopfes 28 verhindert.
Unterhalb der Montageplattform ist die Z-Achse 26 montiert. Der Einführraum für den nicht dargestellten Wechseibehälter Ist mit der Verkleidung 27 abgeschirmt.

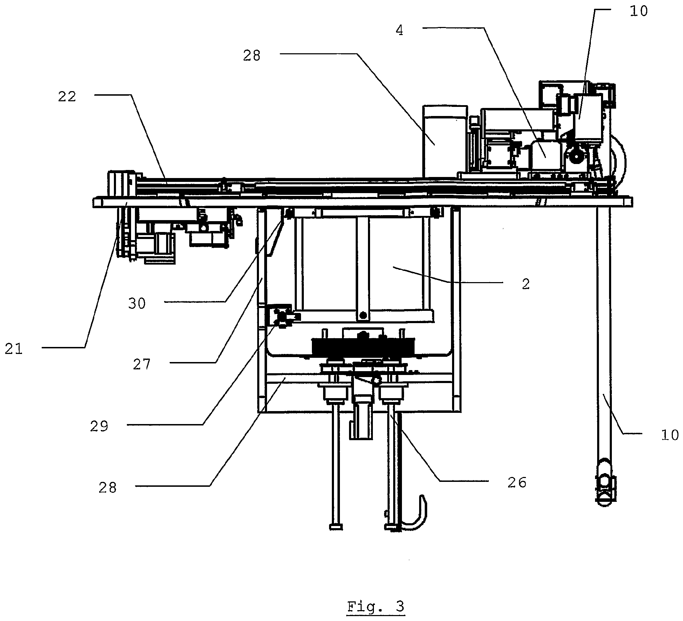

Figur 3 zeigt die Montageplattform 21 mit den Anbauteilen in der Seitenansicht. In dieser Lage Ist der Wechselbehälter 2 zu sehen, der über die Führung 30 an der Montageplattformunterseite nur In horizontaler Richtung verschieblich bis zur Position unter dem Baufeldausschnitt eingeführt und dann über die Arretierung 29 In Position gehalten wird. Die Z-Achse 26 besteht In dieser Ausführung aus vier gleichzeitig angetriebenen Gewinde-Spindeln, die In der Zwischenplattform 28 gelagert sind. Diese wird über die Anbauplatten 27 an der Montageplattform 22 befestigt.

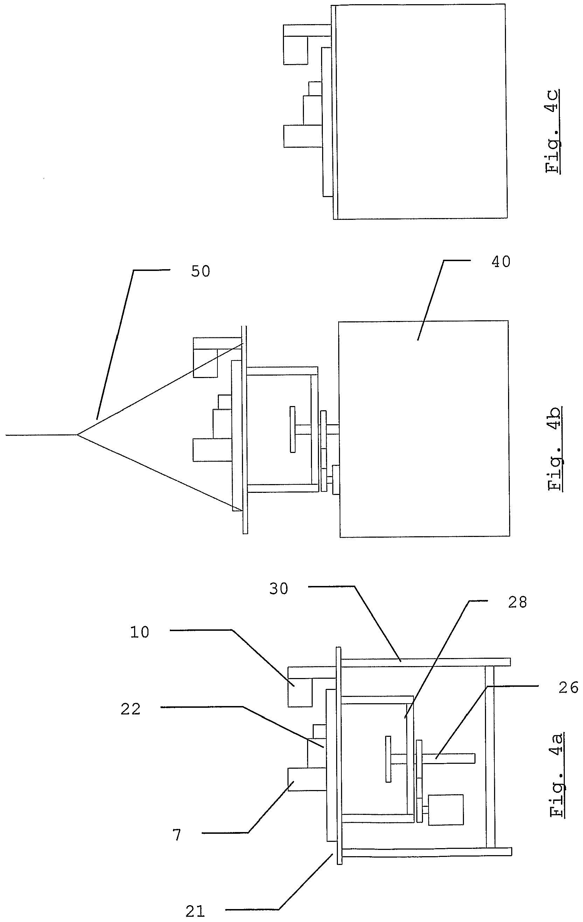

Figur 4 zeigt den Montageablauf der vormontierten Montageplattform 22 in der Bildfolge a bis c In die Verkleidung 40. Die Anbauteile wie z.B. Y-Achse 22, Materialzufuhr 10 und Z-Achse 26 werden an die Montageplattform montiert während (Flg. 4 a) diese auf einem Hilfsrahmen 30 aufliegt, der bestmögliche Zugänglichkeit gewährt. Anschließend (Fig. 4b) wird die vormontierte Montageplattform z.B. mittel Kranlaschen 50 vom Hilfsrahmen 30 in die bereitgestellte Verkleidung 40 gehoben. Zuletzt (Fig. 4 c) wird die Montageplattform In der Verkleidung verschraubt und die nicht dargestellte Haube 41 aufgesetzt.

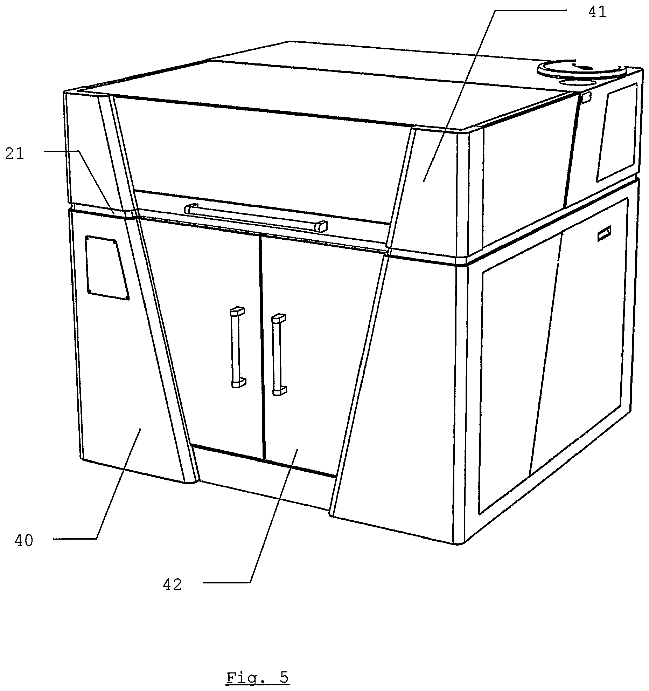

Figur 5 zeigt dann die fertig montierte Vorrichtung mit Verkleidung 40, Montageplattform 21 und Haube 41. In der Front befinden sich unterhalb der Montageplattform 21 Türen 42, durch die der Einfuhr-Raum für den Wechselbehälter 2 abgedeckt wird.

## Patentansprüche

1. Vorrichtung zum schichtweisen Aufbau von Modellen, aufweisend eine höhenverfahrbare Werkstückplattform, eine verkleidung (40), eine Dosiervorrichtung (28) zum Aufbringen von Bindemittel auf die Werkstückplattform, wobei die Vorrichtung zusätzlich eine Montageplattform (21) aufweist, an die alle gemäß eines kartesischen Achsensystems verfahrbaren Verfahreinrichtungen der Dosiervorrichtung (28) und der Werkstückplattform angebracht sind und ein Beschichter (4) zum Aufträgen von Fluiden vorgesehen ist, der Beschichter (4) und alle Verfahreinheiten des Beschichters (4) an der Montageplattform (21) angebracht sind und wobei höheneinstellbare Befestigungselemente verwendet werden, mit denen der Abstand der Montageplattform zu der Verkleidung der Vorrichtung einstellbar ist, sodass alle Anbauteile an die Montageplattform außerhalb der Verkleidung (40) montierte eingestellt und/oder verdrahtet werden können bevor die Montageplattform (21) In die Verkleidung eingebracht und dort fixiert wird.

2. Vorrichtung nach Anspruch 1, wobei ferner die Dosiervorrichtung (28) an der Montageplattform (21) angebracht ist.

## Claims

1. A device for the layered construction of models, comprising a height-adjustable workpiece platform, a cover (40), a metering device (28) for applying binder onto the workpiece platform, wherein said device additionally comprises a mounting platform (21) to which are attached all the movable devices of the metering device (28) and of the workpiece platform, which are movable in accordance with a Cartesian axis system, and a coater (4) is provided for applying fluids, the coater (4) and all movable units of the coater (4) are attached to the mounting platform (21) and wherein height-adjustable fastening elements are used by which the distance of the mounting platform to the cover of the device can be adjusted so that all attachments can be mounted, adjusted and/or wired to the mounting platform outside the cover (40) before the mounting platform (21) is inserted into the cover and fixed there.

2. The device according to claim 1, wherein, further, the metering device (28) is attached to the mounting platform (21).

## Revendications

1. Dispositif de constitution en couches de modèles, comprenant une plateforme pour pièces réglable en hauteur, un habillage (40), un dispositif de dosage (28) pour appliquer du liant sur la plateforme pour pièces, le dispositif comprenant en outre une plateforme de montage (21) sur laquelle sont fixés tous les dispositifs mobiles du dispositif de dosage (28) et de la plateforme pour pièces, qui sont mobiles selon un système d'axes cartésiens, et un enducteur (4) étant prévu pour appliquer des fluides, l'enducteur (4) et toutes les unités mobiles de l'enducteur (4) étant fixés à la plateforme de montage (21) et des éléments de fixation réglables en hauteur étant utilisés, par lesquels la distance entre la plateforme de montage et l'habillage du dispositif peut être ajustée de sorte que toutes les pièces de fixation peuvent être montées, ajustées et/ou câblées à la plateforme de montage à l'extérieur de l'habillage (40) avant que la plateforme de montage (21) soit insérée dans l'habillage et fixée à cet endroit.

2. Dispositif selon la revendication 1, dans lequel, en outre, le dispositif de dosage (28) est monté sur la plateforme de montage (21).
